(19) Europäisches Patentamt
European Patent Office
Office européen des brevets

(11) **EP 3 442 886 B1**

(12) **EUROPÄISCHE PATENTSCHRIFT**

(45) Veröffentlichungstag und Bekanntmachung des Hinweises auf die Patenterteilung:
**05.10.2022   Patentblatt 2022/40**

(21) Anmeldenummer: **17720373.4**

(22) Anmeldetag: **10.04.2017**

(51) Internationale Patentklassifikation (IPC):
**B65G 29/00** (2006.01)   **B65G 47/51** (2006.01)
**B65G 47/80** (2006.01)   **B65B 3/04** (2006.01)
**B67C 3/00** (2006.01)

(52) Gemeinsame Patentklassifikation (CPC):
**B65G 29/00; B65B 3/003; B65B 43/50; B65G 47/5177; B65G 47/80**

(86) Internationale Anmeldenummer:
**PCT/EP2017/058583**

(87) Internationale Veröffentlichungsnummer:
**WO 2017/178442 (19.10.2017 Gazette 2017/42)**

(54) **RUNDSCHALTTISCH UND VERFAHREN ZUM TRANSPORT VON OBJEKTEN**

ROTARY INDEXING TABLE AND METHOD FOR TRANSPORTING OBJECTS

TABLE DE TRANSFERT ROTATIVE ET PROCÉDÉ DE TRANSPORT D'OBJETS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.04.2016   DE 102016004335**

(43) Veröffentlichungstag der Anmeldung:
**20.02.2019   Patentblatt 2019/08**

(73) Patentinhaber: **Fresenius Medical Care Deutschland GmbH**
**61352 Bad Homburg v.d.H (DE)**

(72) Erfinder:
• **HEPPE, John**
**66606 St. Wendel (DE)**
• **JOACHIMSKY, Pascal**
**66636 Tholey (DE)**
• **KUGELMANN, Franz**
**66606 St. Wendel (DE)**

(74) Vertreter: **Oppermann, Frank**
**OANDO Oppermann & Oppermann LLP**
**Wilhelminenstrasse 1a**
**65193 Wiesbaden (DE)**

(56) Entgegenhaltungen:
**WO-A1-2011/000603     WO-A1-2014/090462**
**CH-A5- 566 249**

EP 3 442 886 B1

**Beschreibung**

Die Erfindung betrifft eine Transporteinrichtung zum Transport von Objekten von Arbeitsstation zu Arbeitsstation einer Produktionsanlage. Die Transporteinrichtung verfügt über einen Objektträger, auf dem eine Mehrzahl von Objekt-Trägerelementen zur Ablage von einem oder mehreren Objekten angeordnet sind, und eine Antriebeinheit zum Antrieb des Objektträgers. Der Objektträger ist in aufeinanderfolgenden Arbeitstakten derart bewegbar, dass die Objekt-Trägerelemente auf einer Bewegungsbahn von Arbeitsstation zu Arbeitsstation transportierbar sind. Darüber hinaus betrifft die Erfindung eine Produktionsanlage zur Herstellung von Produkten mit einer derartigen Transporteinrichtung, insbesondere eine Produktionsanlage zur Herstellung von mit einem medizinischen Produkt, z.B. einem Arzneimittel, befüllten Behältnissen.

In Produktionsanlagen zur Herstellung von Produkten finden zum Transport der Produkte von Arbeitsstation zu Arbeitsstation Drehtische Verwendung, die auch als Rundtische oder Rundschalttische bezeichnet werden. Die bekannten Rundschalttische weisen einen kreisrunden Objektträger auf, der um eine vertikale Achse drehbar ist. Der Objektträger wird von einer Antriebseinheit angetrieben. Der Objektträger dreht sich während der Produktion in einzelnen Arbeitstakten schrittweise im oder entgegen dem Uhrzeigersinn. Die Arbeitsstationen sind um den Objektträger umfangsmäßig verteilt angeordnet. Die zu bearbeitenden Objekte befinden sich umfangsmäßig verteilt auf dem Objektträger. Durch Drehen des Objektträgers können die Objekte von Arbeitsstation zu Arbeitsstation transportiert werden. Die Arbeitsstationen führen an den Objekten jeweils einen Arbeitsprozess aus, der einen oder mehrere Produktionsschritte umfassen kann. Die Objekte können auf dem Objektträger in Objekt-Trägerelementen angeordnet sein, die ein oder mehrere Objekte aufnehmen. Die Objekte können herzustellende Produkte (Waren) oder zu bearbeitende Werkstücke sein.

Die bekannten Rundschalttische verfügen über Objektträger, auf denen die Objekt-Trägerelemente relativ zueinander unbeweglich angeordnet sind. Sie sind in vorgegebenen Abständen umfangsmäßig verteilt auf dem Objektträger befestigt. In Verbindung mit den ortsfesten Arbeitsstationen werden die Objekt-Trägerelemente allein durch die Drehung des Objektträgers in die entsprechende Position gegenüber der jeweiligen Arbeitsstation gebracht. Dort verharren die Objekt-Trägerelemente zwangsläufig solange, bis die Arbeitsstation den Arbeitsprozess durchgeführt hat.

Eine Produktionsanlage verfügt im Allgemeinen über Arbeitsstationen mit unterschiedlichen Prozesszeiten. Dabei wird die schrittweise Drehung des Objektträgers im Wesentlichen durch die Dauer des längsten Prozesses bestimmt. Aufgrund des Stillstandes des Objektträgers während eines Arbeitsprozesses mit einer langen Prozesszeit, der vorgegebenen Abstände der Objekt-Trägerelemente und der schrittweisen Drehung des Objektträgers um einen vorgegebenen Drehwinkel ist auch für die Arbeitsprozesse mit kurzen Prozesszeiten zur Bearbeitung jedes Objektes jeweils eine eigene Arbeitsstation erforderlich. Diese Arbeitsstation kommt allerdings nur kurz zum Einsatz. Dies ist mit hohen Investitionen und Betriebskosten verbunden und wenig effizient. Zudem steigt mit der Anzahl der Arbeitsstationen die Ausfallwahrscheinlichkeit der Produktionsanlage. Solche Produktionsanlagen zeichnen sich durch eine hohe Komplexität und eine fehlende Zugänglichkeit der Komponenten aus.

Neben den sogenannten fest verketteten Objektträgern sind aus dem Stand der Technik auch sogenannte modulare Objektträger bekannt, bei denen der Antrieb der Objekt-Trägerelemente mittels eigener Motoren erfolgt, die unabhängig voneinander gesteuert werden können. Derartige Systeme sind aber sehr komplex und wartungsintensiv.

Aus der CH 566 249 A5 ist eine Transporteinrichtung mit einer linearen Bewegungsbahn bekannt. Der Objektträger wird von parallel verlaufenden Ketten gebildet. Die Objekt-Trägerelemente stützen sich auf Ketten mittels schwenkbaren Mitnehmern ab. Wenn die Mitnehmer mit den Ketten in Eingriff sind, werden die Objekt-Trägerelemente von den Ketten mitgenommen. Die Objekt-Trägerelemente können aber auch mittels eines Anschlages angehalten werden, der an einem Anschlagbolzen des Objekt-Trägerelements anschlägt. Die Anschläge werden mit einer Kolben/Zylinder-Anordnung betätigt. Wenn der Anschlag an dem Anschlagbolzen anschlägt, gleitet der Mitnehmer des Objekt-Trägerelements über die Ketten. CH566249 offenbart eine Transporteinrichtung nach dem Oberbegriff des Anspruchs 1.

Die WO 2014/090462 A1 beschreibt eine Einrichtung zur Befüllung von Behältern, die über eine Linearantriebsanordnung mit einer geschlossenen Laufstrecke und einer Vielzahl von Läufern verfügt, die Aufnahmen für Behälter aufweisen. An der Laufstrecke sind Stationen angeordnet, die eine Füllstation zum Befüllen der Behälter umfasst. Die Transporteinrichtung sieht eine Steuereinheit vor, mit der die Läufer individuell angesteuert werden können.

Die WO 2011/000603 A1 beschreibt eine Vorrichtung zur Handhabung von Objekten, die über eine Handhabungseinrichtung verfügt, die Objekte aufnimmt und an eine Bearbeitungsstation übergibt. Die Handhabungseinrichtung nimmt mehrere Objekte mittels eines Objektträgers gleichzeitig auf und übergibt die Objekte einer Überführeinrichtung, die mehrere Trägerelemente aufweist. Der Bewegungsablauf jedes Trägerelements ist individuell steuerbar.

Der Erfindung liegt die Aufgabe zugrunde, eine Transporteinrichtung zum Transport von Objekten von Arbeitsstation zu Arbeitsstation einer Produktionsanlage bereitzustellen, die einen relativ einfachen Aufbau hat und eine flexible Gestaltung des Produktionsprozesses erlaubt. Eine weitere Aufgabe der Erfindung ist eine Produktionsanlage zur Herstellung von Produkten zu schaffen, die einen relativ einfachen Aufbau hat und eine flexible Gestaltung des Produktionsprozesses erlaubt.

Die Lösung dieser Aufgaben erfolgt erfindungsgemäß mit den Merkmalen der unabhängigen Patentansprüche. Die abhängigen Ansprüche betreffen vorteilhafte Ausführungsformen der Erfindung.

Die erfindungsgemäße Transporteinrichtung erlaubt eine flexible Gestaltung des Produktionsprozesses mit einer konventionellen, frei programmierbaren Steuerung. Die Vorteile der erfindungsgemäßen Vorrichtung kommen insbesondere dann zum Tragen, wenn die Produktion Produktionsprozesse mit unterschiedlichen Prozesszeiten umfasst. Die erfindungsgemäße Transporteinrichtung zum Transport von Objekten von Arbeitsstation zu Arbeitsstation einer Produktionsanlage verfügt über einen Objektträger, auf dem eine Mehrzahl von Objekt-Trägerelementen angeordnet ist. Unter Objekt-Trägerelementen werden sämtliche Elemente verstanden, auf denen ein oder mehrere Objekte abgelegt oder angeordnet werden können. Die Objekte können auf den Objekt-Trägerelementen lose liegen oder auf den Objekt-Trägerelementen fixiert sein. Der Objektträger ist in aufeinanderfolgenden Arbeitstakten derart bewegbar, dass die Objekt-Trägerelemente auf einer Bewegungsbahn von Arbeitsstation zu Arbeitsstation transportiert werden können. Die Bewegungsbahn kann eine lineare Bahn oder eine Kreisbahn sein. Folglich kann der Objektträger eine Linearbewegung ausführen oder sich um eine Achse drehen. Zum Antrieb des Objektträgers für die Linearbewegung oder die Drehung ist eine Antriebseinheit vorgesehen. Die Erfindung ist aber nicht auf Kreisbahnen oder lineare Bahnen beschränkt. Erfindungsgemäß sind auch Abweichungen von der Kreisbahn oder einer linearen Bahn möglich.

Die erfindungsgemäße Transporteinrichtung zeichnet sich dadurch aus, dass mindestens ein Objekt-Trägerelement der Mehrzahl von Objekt-Trägerelementen auf dem Objektträger in Richtung der Bewegungsbahn, auf der die Trägerelemente von Arbeitsstation zu Arbeitsstation transportierbar sind, relativ zum Objektträger verschiebbar angeordnet ist. Folglich stellt der Objekt-Objektträger zusammen mit den Objekt-Trägerelementen keine starre Anordnung dar. Die Objekt-Trägerelemente sind auf dem Objekt-Objektträger frei verschiebbar und verfügen nicht über eigene Antriebe.

Darüber hinaus zeichnet sich die erfindungsgemäße Transporteinrichtung dadurch aus, dass dem mindestens einen Objekt-Trägerelement ein Mitnehmerelement und ein Halteelement zugeordnet sind. Das einem Objekt-Trägerelement zugeordnete Mitnehmerelement und das demselben Objekt-Trägerelement zugeordnete Halteelement können bzw. dürfen in keinem Betriebszustand gleichzeitig aktiv sein. Während das Mitnehmerelement sich zusammen mit dem Objektträger bewegt, ist das Halteelement ortsfest. Das Mitnehmerelement kann einen aktiven Zustand, in dem eine Relativbewegung von Objekt-Trägerelement und Objektträger verhindert wird, und einen nicht aktiven Zustand einnehmen, in dem eine Relativbewegung von Objekt-Trägerelement und Objektträger zugelassen wird. Zwischen diesen beiden Zuständen kann das Mitnehmerelement bewegt bzw. umgeschaltet werden. Das Halteelement kann einen aktiven Zustand, in dem das Objekt-Trägerelement festgehalten wird, und einen nicht aktiven Zustand einnehmen, in dem das Objekt-Trägerelement freigegeben wird. Zwischen diesen beiden Zuständen kann das Halteelement bewegt bzw. umgeschaltet werden. Da das Halteelement ortsfest ist, wird das Objekt-Trägerelement nicht an dem Objektträger arretiert, sondern von außen festgehalten, während sich der Objektträger bewegt. Das Objekt-Trägerelement kann also in Bezug auf ein ortsfestes räumliches Koordinatensystem festgehalten oder zur Bewegung auf oder in dem Objektträger freigegeben werden, wobei sich der Objektträger in dem ortsfesten räumlichen Koordinatensystem bewegen kann, beispielsweise um eine zentrale Achse drehen kann.

Die Betätigung des mindestens einen Mitnehmerelements und des mindestens einen Halteelements erfolgt mittels einer Betätigungseinheit. Die Betätigungseinheit für die Mitnehmerelemente und Halteelemente kann über Betätigungsorgane verfügen, mit denen Mitnehmer- und Halteelemente zwischen den beiden Positionen bewegt werden können. Die Betätigungseinheit kann beispielsweise einen elektromotorischen und/oder pneumatischen und/oder hydraulischen Antrieb aufweisen.

Die Betätigungseinheit ist derart ausgebildet, dass in einzelnen Arbeitstakten der aufeinanderfolgenden Arbeitstakte das Mitnehmerelement einen aktiven Zustand und das Halteelement einen inaktiven Zustand einnimmt, so dass das jeweilige Objekt-Trägerelement von dem Objektträger mitgenommen und von Arbeitsstation zu Arbeitsstation bewegt wird. Die Betätigungseinheit ist darüber hinaus derart ausgebildet, dass in einzelnen Arbeitstakten der aufeinanderfolgenden Arbeitstakte, das Mitnehmerelement einen inaktiven Zustand und das Halteelement einen aktiven Zustand einnimmt, so dass das Objekt-Trägerelement an einer Arbeitsstation verbleibt.

Die Betätigung des mindestens einen Mitnehmer- bzw. Halteelements durch die Betätigungseinheit erlaubt somit eine Bewegung des Objektträgers zum Transport von Objekten zu einer Arbeitsstation mit einer kurzen Prozesszeit, während ein Objekt-Trägerelement an einer Arbeitsstation mit einer langen Prozesszeit verbleibt.

Wenn der gesamte Produktionsprozess mit mehreren Arbeitsprozessen nur einen Arbeitsprozess mit einer langen Prozesszeit umfasst, ist es grundsätzlich ausreichend, wenn nur ein Objekt-Trägerelement auf dem Objektträger in Richtung der Bewegungsbahn, auf der die Objekt-Trägerelemente von Arbeitsstation zu Arbeitsstation transportierbar sind, relativ zum Objektträger verschiebbar angeordnet ist. Dieses Objekt-Trägerelement kann dann bei der Arbeitsstation mit der langen Prozesszeit verbleiben. Bei nur einem Objekt-Trägerelement ist nur ein Mitnehmer- bzw. Halteelement erforderlich. Bei zwei Objekt-Trägerelementen beispielsweise sind mindestens zwei Mitnehmer- bzw. Halteelemente erforderlich, wenn die beiden Trägerelemente unabhängig voneinander gesteuert werden sollen.

Eine bevorzugte Ausführungsform der Transporteinrichtung sieht vor, dass sämtliche Objekt-Trägerelemente auf dem Objektträger frei bewegbar sind, wobei jedem Objekt-Trägerelement ein Mitnehmerelement und ein Halteelement zugeordnet sind. Dadurch lassen sich sämtliche Objekt-Trägerelemente unabhängig voneinander steuern. Die Betätigung der Mitnehmer- bzw. Halteelemente kann mit einer frei programmierbaren Steuerung erfolgen. Dadurch ist die Transporteinrichtung für unterschiedliche Produktionsprozesse flexibel einsetzbar.

Eine weitere bevorzugte Ausführungsform sieht vor, dass der Objektträger ein Rundschalttisch ist, der einen um eine Drehachse drehbaren Objektträger aufweist. Mit dem Rundschalttisch können die Objekte auf einer Kreisbahn von Arbeitsstation zu Arbeitsstation transportiert werden. Die Objekt-Trägerelemente sind bei dieser Ausführungsform auf einer Kreisbahn umfangsmäßig verteilt angeordnet.

Zur Durchführung der einzelnen Arbeitsprozesse ist es erforderlich, dass sich die einzelnen Objekt-Trägerelemente, die auf der Bewegungsbahn verschiebbar angeordnet sind, nicht gegenseitig blockieren können. Daher ist nicht die gesamte Bewegungsbahn mit Objekt-Trägerelementen besetzt. Bei der Ausführung der Transporteinrichtung als Rundschalttisch sind die Objekt-Trägerelemente auf einer Kreisbahn derart umfangsmäßig verteilt angeordnet, dass auf einem Abschnitt der Kreisbahn ein oder mehrere Objekt-Trägerelemente nicht vorhanden sind. Daher können die einzelnen Objekt-Trägerelemente zumindest innerhalb gewisser Grenzen gegeneinander auf der Kreisbahn verschoben werden.

Eine besonders bevorzugte Ausführungsform sieht eine Führungsbahn vor, in der die Objekt-Trägerelemente in Bezug auf den Objektträger frei bewegbar geführt sind, so dass sie in Bezug auf ein ortsfestes räumliches Koordinatensystem festgehalten werden können. Die Führungsbahn kann unterschiedlich ausgebildet sein. Allein entscheidend ist, dass die Objekt-Trägerelemente sich nur auf der Bewegungsbahn bewegen können. Die Führungsbahn kann beispielsweise eine kreisförmige oder lineare Führungsbahn sein.

Zur Aufnahme der Objekte weisen die Objekt-Trägerelemente vorzugsweise Aufnahmeelemente auf, in die oder auf die sich die Objekte ein- bzw. auflegen lassen. Dadurch sind die Objekte an den Objekt-Trägerelementen ausreichend fixiert.

Die Mitnahmeelemente und Halteelemente können unterschiedlich ausgebildet sein. Allein entscheidend ist, dass eine ausreichende Fixierung der Objekt-Trägerelemente erfolgen kann. Die Fixierung kann durch eine formschlüssige und/oder kraftschlüssige Verbindung erfolgen. Die Mitnahmeelemente sind vorzugsweise derart ausgebildet, dass sie eine form- bzw. kraftschlüssige Verbindung zwischen einem Teil des Objekt-Trägerelements und einem Teil des Objektträgers herstellen, während die Halteelemente derart ausgebildet sind, dass eine form- bzw. kraftschlüssige Verbindung zwischen einem Teil des Objekt-Trägerelements und einem ortsfesten Teil hergestellt wird. Der ortsfeste Teil kann beispielsweise ein Gehäuseteil der Transporteinrichtung sein. Entscheidend ist, dass das Halteelement in Bezug auf das ortsfeste räumliche Koordinatensystem, in dem sich der Objektträger dreht, von außen und das Mitnahmeelement von innen an dem Objekt-Trägerelement angreift.

Durch die Steuerung der Antriebseinheit des Objektträgers und der Betätigung der Mitnehmer- bzw. Halteelemente werden die Objekt-Trägerelemente mit den Objekten in der gewünschten Bearbeitungsposition gegenüber der jeweiligen Arbeitsstation positioniert und können von einer Arbeitsstation zu einer anderen Arbeitsstation weiterbewegt werden.

Da die Objekt-Trägerelemente nicht über eigene Antriebe verfügen, vereinfacht sich der Aufbau der Transporteinrichtung. Die Transporteinrichtung kann mit konventionellen Baugruppen realisiert werden. Die Verwendung von Standard-Maschinenteilen macht die Transporteinrichtung wartungsarm. Für einzelne Objekte lassen sich beliebige Wartezonen einrichten und auch zusätzliche Prozesse, beispielsweise die Reinigung von Objekten, lassen sich leicht in den Produktionsprozess integrieren, da für die Integration dieser Prozesse in beliebigen Positionen gezielt Lücken geschaffen werden können. Auch die Integration von Prüfplätzen ist möglich.

Die erfindungsgemäße Produktionsanlage zur Herstellung von Produkten verfügt über eine oder mehrere der erfindungsgemäßen Transporteinrichtungen. Entlang der Bewegungsbahn der Transporteinrichtung können eine Mehrzahl von Arbeitsstationen angeordnet werden. Jede Arbeitsstation kann zur Durchführung eines Arbeitsprozesses vorgesehen sein, der mindestens einen Arbeitsschritt umfasst. Die nicht abschließende Liste möglicher Beispiele für Arbeitsschritte kann beinhalten: Manipulieren, Zuführen, Abführen, mechanisches Bearbeiten, thermisches Bearbeiten, Befüllen, Reinigen, Bestücken, Wiegen, Markieren. Die Arbeitsstationen können einen Arbeitsprozess an einem Objekt oder mehreren Objekten gleichzeitig durchführen.

Die erfindungsgemäße Transporteinrichtung kann in unterschiedlichen Produktionsanlagen Verwendung finden. Bei einer besonders bevorzugten Ausführungsform findet die erfindungsgemäße Transporteinrichtung in einer Produktionsanlage zur Herstellung von mit einem medizinischen Produkt, insbesondere einem Arzneimittel, befüllten Behältnissen Verwendung, insbesondere zur Herstellung von medizinischen Lösungsbeuteln, beispielsweise Lösungsbeutel für die Peritonealdialyse oder die Akut-Hämodialyse oder die Infusionstechnik. Derartige Lösungsbeutel werden hergestellt, indem Beutelrohlinge mit einem Anschlussstück, z. B. einem sogenannten Einschweissschiffchen mit Port oder einer Schutzkappe oder Verschlusskappe versehen werden und die mit dem Anschlussstück versehenen Beutel mit einer Lösung befüllt werden. Der Produktionsschritt der Befüllung des Beutels mit der Lösung stellt dabei den Schritt mit der längsten Prozesszeit dar.

Die erfindungsgemäße Produktionsanlage zur Herstellung von mit einem medizinischen Produkt befüllten Behältnissen verfügt über eine Arbeitsstation mit einer längeren Prozesszeit als die Prozesszeiten der anderen Arbeitsstationen. Die Arbeitsstation mit der längeren Prozesszeit ist die Arbeitsstation zum Befüllen der Behältnisse mit dem medizinischen Produkt, während die anderen Arbeitsstationen mit den kürzeren Prozesszeiten eine Arbeitsstation zum Auflegen von ungefüllten Behältnissen, die mit einem Anschlussstück zu versehen sind, eine Arbeitsstation zum Anbringen des Anschlussstücks an den Behältnissen und eine Arbeitsstation zum Entnehmen der mit dem Anschlussstück versehenen und mit dem medizinischen Produkt befüllten Behältnissen sind. Der Produktionsprozess kann aber noch weitere Arbeitsstationen umfassen, beispielsweise Arbeitsstationen zum Verschließen der Anschlussstücke oder Arbeitsstationen zum Aufbringen von Produktapplikationen, z. B. Etiketten oder Label.

Während die Behältnisse in einem Objekt-Trägerelement mit der medizinischen Flüssigkeit befüllt werden, können gleichzeitig eine oder mehrere andere Objekt-Trägerelemente mit einem oder mehreren anderen Behältnissen an einer anderen Arbeitsstation positioniert werden, wodurch für die anderen Arbeitsprozesse, beispielsweise zum Bestücken der ungefüllten Behältnisse mit Anschlussstücken, jeweils nur eine einzige Arbeitsstation benötigt wird. Dadurch wird der Aufbau der gesamten Produktionsanlage vereinfacht und deren Ausfallwahrscheinlichkeit aufgrund der Reduzierung der Anzahl der Arbeitsstationen verringert.

Nachfolgend werden zwei Ausführungsbeispiele der Erfindung unter Bezugnahme auf die Zeichnungen näher erläutert.

Es zeigen:

Fig. 1 eine Draufsicht auf ein Ausführungsbeispiel einer erfindungsgemäßen Transporteinrichtung in stark vereinfachter schematischer Darstellung,

Fig. 2 die erfindungsgemäße Transporteinrichtung in schematischer Schnittdarstellung,

Fig. 3 den ersten Arbeitsschritt eines Verfahrens zur Herstellung von Produkten mit der erfindungsgemäßen Transporteinrichtung in schematischer Schnittdarstellung,

Fig. 4 den zweiten Arbeitsschritt des Herstellungsverfahrens in schematischer Schnittdarstellung,

Fig. 5 den dritten Arbeitsschritt des Verfahrens in schematischer Schnittdarstellung,

Fig. 6 den vierten Arbeitsschritt des Verfahrens in schematischer Schnittdarstellung,

Fig. 7 den fünften Arbeitsschritt des Verfahrens in schematischer Schnittdarstellung,

Fig. 8 einen kleinen Arbeitstakt des sechsten Arbeitsschrittes des Verfahrens in schematischer Schnittdarstellung,

Fig. 9 einen großen Arbeitstakt des sechsten Arbeitsschrittes des Verfahrens in schematischer Schnittdarstellung und

Fig. 10 ein zweites Ausführungsbeispiel eines Objektträgers der erfindungsgemäßen Transporteinrichtung in stark vereinfachter schematischer Darstellung.

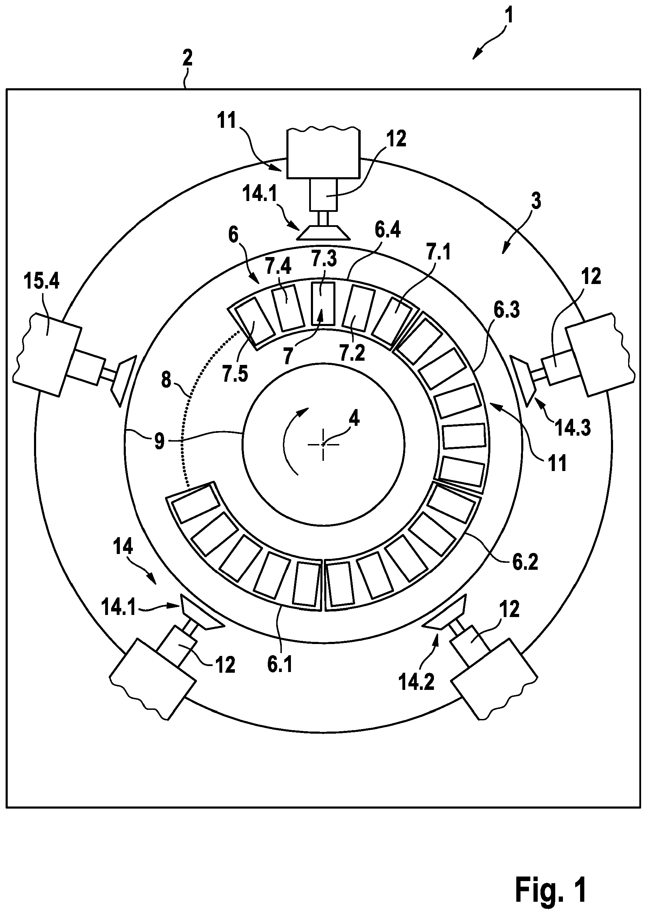

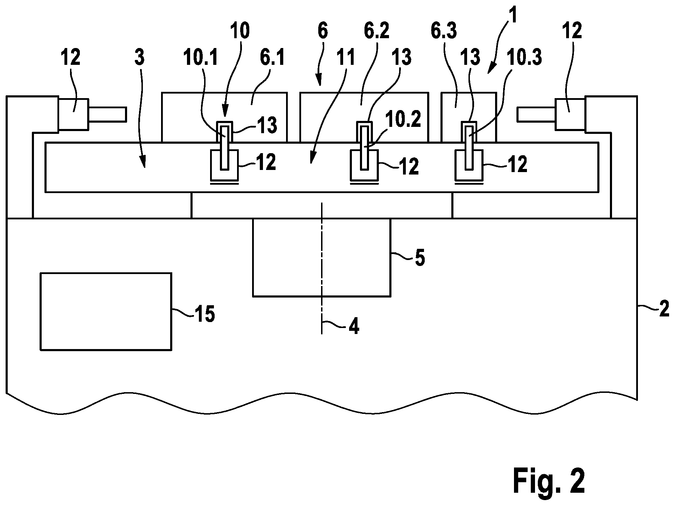

Die Figuren 1 und 2 zeigen in stark vereinfachter schematischer Darstellung ein Ausführungsbeispiel der erfindungsgemäßen Transporteinrichtung in der Draufsicht (Fig. 1) und der Seitenansicht (Fig. 2). In den Figuren sind nur die für die Erfindung wesentlichen Komponenten der Transporteinrichtung dargestellt. Die Figuren dienen nur der Veranschaulichung. Die Größenverhältnisse zwischen den einzelnen Komponenten müssen nicht den tatsächlichen Verhältnissen entsprechen.

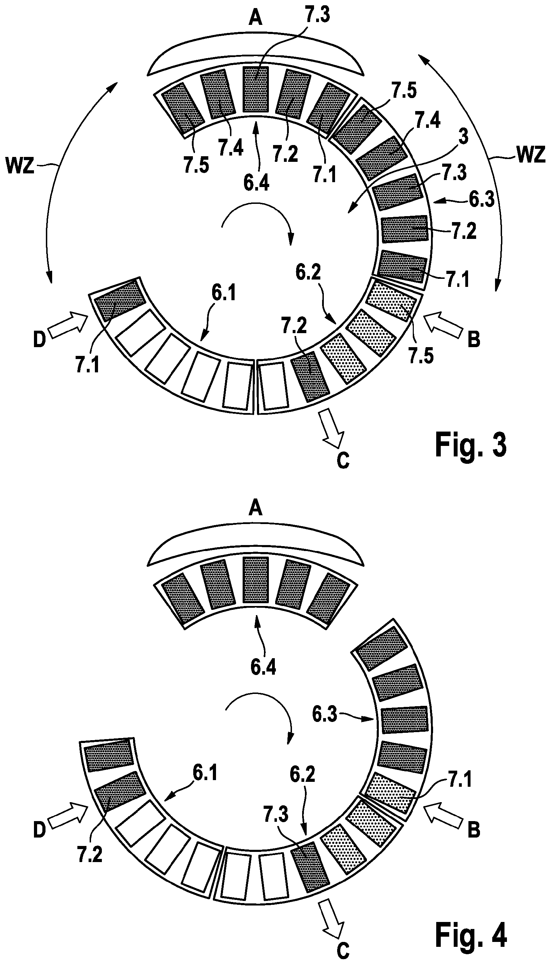

Bei dem vorliegenden Ausführungsbeispiel ist die Transporteinrichtung als Rundschalttisch ausgebildet. Der Rundschalttisch 1 weist ein Gehäuse 2 auf, das einen Objektträger 3 aufnimmt, der um eine vertikale Drehachse 4 von einer Antriebseinheit 5 drehbar ist. In den Figuren 3 bis 10 steht die vertikale Drehachse 4 senkrecht auf der Bildebene. Die Antriebseinheit 5 dreht den Objektträger 3 in aufeinanderfolgenden Arbeitstakten schrittweise um einen fest vorgegebenen Drehwinkel.

Der Objektträger 3 nimmt eine Mehrzahl von Objekt-Trägerelementen auf. Bei dem vorliegenden Ausführungsbeispiel nimmt der Objektträger 3 die Objekt-Trägerelemente 6.1, 6.2, 6.3, 6.4 auf. Die Objekt-Trägerelemente 6 weisen jeweils eine Mehrzahl von Aufnahmeelementen 7 auf. Bei dem vorliegenden Ausführungsbeispiel weisen die Objekt-Trägerelemente 6 jeweils fünf Aufnahmeelemente 7.1, 7.2, 7.3, 7.4, 7.5 auf. Jedes Aufnahmeelement kann ein Objekt aufnehmen. Es ist aber auch möglich, dass jedes Objekt-Trägerelement 6 nur ein Aufnahmeelement aufweist, wobei es auch möglich ist, dass ein Aufnahmeelement 7 auch mehrere Objekte aufnimmt. Die Aufnahmeelemente könnten beispielsweise Schalen, Ständer, Halterungen oder dergleichen sein.

Die Objekt-Trägerelemente 6 sind auf dem Objektträger 3 umfangsmäßig verteilt angeordnet. Sie beschreiben jeweils die Form eines Kreissegments. Wenn sich der Objektträger dreht, beispielsweise im Uhrzeigersinn, wie durch einen Pfeil dargestellt ist, können sich die Trägerelemente 6 auf einer kreisförmigen Bewegungsbahn 8 bewegen. Die Objekt-Trägerelemente 6 sind aber nicht fest mit dem Objektträger 3 verbunden, sondern in einer nur schematisch dargestellten Führung 9 in Richtung der Kreisbahn 8 verschiebbar geführt. Wenn die Objekt-Trägerelemente 6 also von außen festgehalten werden, kann sich der Objektträger 3 drehen, ohne dass die Objekt-Trägerelemente mitgenommen werden.

Bei dem vorliegenden Ausführungsbeispiel haben die einzelnen Trägerelemente 6 einen Umfangswinkel von jeweils 360°/5 = 72°. Da nur vier Objekt-Trägerelemente 6.1, 6.2, 6.3, 6.4 vorgesehen sind, bleibt ein Abschnitt der kreisförmigen Bewegungsbahn 8 frei. Dieser Freiraum erlaubt ein Verschieben der Objekt-Trägerelemente 6 relativ zum Objektträger 3, ohne dass die Objekt-Trägerelemente sich gegenseitig blockieren. Die Anzahl der Objekt-Trägerelemente 6 und der Umfangswinkel der Objekt-Trägerelemente 6 sind von der Anordnung und Anzahl der Arbeitsstationen abhängig.

Bei dem vorliegenden Ausführungsbeispiel, das nachfolgend im Einzelnen unter Bezugnahme auf die Figuren 3 bis 9 beschrieben wird, ist die Transporteinrichtung Teil einer Produktionsanlage, die über vier Arbeitsstationen verfügt. In den Figuren 1 und 2 sind die Arbeitsstationen nicht dargestellt. Sie sind um den Objektträger 3 des Rundschalttisches 1 umfangsmäßig verteilt angeordnet.

Die Transporteinrichtung verfügt weiterhin über eine Mehrzahl von Mitnehmerelementen. Bei dem vorliegenden Ausführungsbeispiel sind sämtliche Objekt-Trägerelemente 6 verschiebbar geführt. Daher ist jedem Objekt-Trägerelement 6.1, 6.2, 6.3, 6.4 ein Mitnehmerelement 10 zugeordnet. In Fig. 2 sind nur drei Mitnehmerelemente 10.1, 10.2, 10.3 gezeigt. Sämtliche Mitnehmerelemente werden von einer Betätigungseinheit betätigt, die den einzelnen Mitnehmerelementen zugeordnete Betätigungsorgane 12 aufweist. In den Figuren 1 und 2 ist die Betätigungseinheit als eine Einrichtung, die die Betätigungsorgane 12 aufweist, mit dem Bezugszeichen 11 bezeichnet. Die Betätigungsorgane 12 können beispielsweise elektrische, magnetische, elektromagnetische, pneumatische oder hydraulische Antriebe umfassen.

Die Mitnehmerelemente 10 sind bei dem vorliegenden Ausführungsbeispiel Stifte, die in Ausnehmungen 13 der Objekt-Trägerelemente 6 greifen. Die Mitnehmerelemente 10 können von den Betätigungsorganen 12 der Betätigungseinheit 11 derart betätigt werden, dass sie einen Zustand einnehmen, in dem sie in eine Ausnehmung 13 eines Objekt-Trägerelements 6 greifen oder aus der Ausnehmung zurückgezogen sind. Dadurch können die Objekt-Trägerelemente 6 an dem Objektträger 3 festgestellt werden. Die Betätigungsorgane 12 können von der Betätigungseinheit 11 unabhängig voneinander betätigt werden. Die Objekt-Trägerelemente 6 sind unabhängig voneinander arretierbar.

Darüber hinaus weist die Transporteinrichtung eine Mehrzahl von Halteelementen 14 auf. Bei dem vorliegenden Ausführungsbeispiel ist jedem Objekt-Trägerelement 6 ein Halteelement 14.1, 14.2, 14.3, 14.4, (14.5) zugeordnet. Die Halteelemente 14 werden von den Betätigungsorganen 12 der Betätigungseinheit 11 betätigt. Die Betätigungsorgane 12 für die Halteelemente können beispielsweise elektrische, magnetische, elektromagnetische, pneumatische oder hydraulische Antriebe umfassen. Die Halteelemente 14 sind umfangsmäßig verteilt, um den Objektträger 3 angeordnet. Sie bewegen sich nicht wie die Mitnahmeelemente 10 zusammen mit dem Objektträger 3, sondern sind fest mit dem Gehäuse 2 der Transporteinrichtung verbunden. Die Halteelemente 14 können beispielsweise in Längsrichtung verschiebbare Druckstempel sein, die auf die äußeren Umfangsflächen der Objekt-Trägerelemente 6 gedrückt werden, so dass die Objekt-Trägerelemente von außen festgehalten werden. Die Halteelemente 14 können alternativ beispielsweise in die Bewegungsbahn der Objekt-Trägerelemente eingreifen, so dass die Objekt-Trägerelemente von außen festgehalten werden.

Des Weiteren verfügt die Transporteinrichtung über eine Steuereinheit 15 für die Betätigungseinheit 11. Die Steuereinheit 15 kann eine frei programmierbare Steuereinheit sein, mit der die einzelnen Betätigungsorgane 12 der Betätigungseinheit 11 unabhängig voneinander zu bestimmten Zeitpunkten angesteuert werden können, so dass die Mitnehmer- und Halteelemente 10, 14 betätigt werden.

Die Steuereinheit 15 ist derart ausgebildet, dass in einzelnen Arbeitstakten das einem Objekt-Trägerelement 6 zugeordnete Mitnehmerelement 10 einen aktiven Zustand und das dem Objekt-Trägerelement zugeordnete Halteelement 14 einen nicht aktiven Zustand einnimmt, so dass das Objekt-Trägerelement 6 von dem Objektträger 3 mitgenommen und von Arbeitsstation zu Arbeitsstation bewegt wird. Die Steuereinheit 15 ist ferner derart ausgebildet, dass in einzelnen Arbeitstakten das dem Objekt-Trägerelement 6 zugeordnete Mitnehmerelement 10 einen inaktiven Zustand und das Halteelement 14 einen aktiven Zustand einnimmt, so dass das Objekt-Trägerelement an einer Arbeitsstation verbleibt.

Die Figuren 3 bis 9 zeigen die einzelnen Arbeitsschritte eines Verfahrens zur Herstellung eines Produktes. Bei dem vorliegenden Ausführungsbeispiel ist das Herstellungsverfahren ein Verfahren zur Herstellung von mit einem medizinischen Produkte befüllten Behältnissen, insbesondere von mit einer medizinischen Lösung befüllten Beuteln, insbesondere Folienbeutel für die Peritonealdialyse. Die Figuren 3 bis 9 dienen nur zur Veranschaulichung des Grundprinzips des Verfahrens. Daher sind nicht sämtliche Verfahrensschritte dargestellt, die zur Herstellung der Produkte erforderlich sind.

Die Produktionsanlage umfasst mindestens eine der unter Bezugnahme auf die Figuren 1 und 2 beschriebenen Transporteinrichtung. Fig. 3 zeigt in schematischer Darstellung nur die vier Objekt-Trägerelemente 6.1, 6.2, 6.3, 6.4 der Transporteinrichtung (Drehschalttisch). Die Produktionsanlage weist bei dem vorliegenden Ausführungsbeispiel vier nur andeutungsweise dargestellte Arbeitsstationen A, B, C, D auf, die umfangsmäßig verteilt um den Objektträger 3 angeordnet sind. Die Behältnisse, insbesondere Folienbeutel, werden als Rohlinge bereitgestellt, die nicht mit einem Anschlussstück, insbesondere mit einem Einschweissschiffchen, versehen und nicht mit dem medizinischen Produkt, insbesondere einer Flüssigkeit, beispielsweise einer Lösung für die Peritonealdialyse, befüllt sind. Die Arbeitsstation A ist eine Füllstation, mit der die mit dem Anschlussstück versehenen Beutel befüllt werden. Das Befüllen der Beutel ist ein Arbeitsprozess mit einer langen Prozesszeit. Die Prozesszeit ist deutlich länger als die Prozesszeit der anderen Arbeitsstationen. Die Arbeitsstation B mit einer kurzen Prozesszeit ist eine Arbeitsstation, mit der die Beutelrohlinge mit den Anschlussstücken bestückt werden. Die Arbeitsstation C ist eine Arbeitsstation zur Entnahme der mit dem Anschlussstück versehenen und befüllten Beutel, und die Arbeitsstation D ist eine Arbeitsstation zum Auflegen der Beutelrohlinge. Die Arbeitsstationen B, C, D haben eine Prozesszeit, die kürzer als die Prozesszeit der Arbeitsstation A ist.

Die Antriebseinheit 5 dreht den Objektträger 3 schrittweise in aufeinanderfolgenden kurzen oder langen Arbeitstakten im Uhrzeigersinn. Bei dem vorliegenden Ausführungsbeispiel wird der Objektträger 3 in einem kurzen Arbeitstakt um 14,4° im Uhrzeigersinn gedreht (360° / 5 (5 Trägerelemente) / 5 (5 Aufnahmeelemente 7.1, 7.2, 7.3, 7.4, 7.5 pro Trägerelement = 14,4°). Die Mitnehmerelemente 10 und Halteelemente 14 (Fig. 1 und Fig. 2) sind in den Figuren 3 bis 9 nicht dargestellt.

Das beschriebene Verfahren zeichnet sich durch eine Kombination aus Einzeltakten für die Arbeitsstationen B, C, D mit kurzer Prozesszeit und Vielfachtakten für die Arbeitsstation A mit langer Prozesszeit aus. Dafür ist das Auffangen der Einzeltakte vor der Arbeitsstation A mit langer Prozesszeit und das Auffangen des Vielfachtaktes nach der Arbeitsstation A mit langer Prozesszeit erforderlich. Das Auffangen der Einzeltakte und des Vielfachtaktes erfolgt in Wartezonen WZ in Drehrichtung (im Uhrzeigersinn) vor und hinter der Arbeitsstation A mit langer Prozesszeit. Nachfolgend werden die einzelnen Arbeitsschritte beschrieben.

Fig. 3 zeigt den ersten Arbeitsschritt (Ausgangsposition). Die vier Objekt-Trägerelemente 6.1, 6.2, 6.3, 6.4 sind derart angeordnet, dass sich in der Wartezone WZ vor der Arbeitsstation A mit langer Prozesszeit im ersten Arbeitsschritt kein Objekt-Trägerelement befindet. Die Beutelrohlinge befinden sich in den Aufnahmeelementen 7.1, 7.2, 7.3, 7.4, 7.5 des dritten und vierten Objekt-Trägerelements 6.3, 6.4. Die Wartezone WZ vor der Arbeitsstation A mit langer Prozesszeit ist leer und die Wartezone WZ hinter der Arbeitsstation A ist voll. Die Arbeitsstation A für den Füllprozess mit der langen Prozesszeit und die Arbeitsstationen B, C, D für die Arbeitsprozesse mit den kurzen Arbeitszeiten sind im Betrieb. Die Arbeitsstation B bestückt den in dem fünften Aufnahmeelement 7.5 des zweiten Objekt-Trägerelements 6.2 befindlichen befüllten Beutel mit einem Anschlussstück, beispielsweise mit einer Abdeckkappe. Die Arbeitsstation C entnimmt den in dem zweiten Aufnahmeelement 7.2 des zweiten Objekt-Trägerelements 6.2 befindlichen mit dem Anschlussstück versehenen und mit der Lösung befüllten, fertigen Beutel und die Arbeitsstation D bestückt das erste Aufnahmeelement 7.1 des ersten Objekt-Trägerelements 6.1 mit einem Beutelrohling.

Fig. 4 zeigt den zweiten Arbeitsschritt. Die Steuereinheit 15 steuert die Betätigungseinheit 11 derart an, dass die dem ersten, zweiten und dritten Objekt-Trägerelement 6.1, 6.2, 6.3 zugeordneten Mitnehmerelemente 10 aktiv und die diesen Objekt-Trägerelementen zugeordneten Halteelemente 14 inaktiv sind, während das dem vierten Objekt-Trägerelement 6.4 zugeordnete Mitnehmerelement 10 inaktiv und das diesem Objekt-Trägerelement zugeordnete Halteelement 14 aktiv ist. Folglich werden das erste, zweite und dritte Objekt-Trägerelement 6.1, 6.2, 6.3 bei einer Drehung des Objektträgers 3 im Uhrzeigersinn mitgenommen und das vierte Objekt-Trägerelement 6.4 festgehalten. Nachdem sich der Objektträger 3 um einen vorgegebenen Drehwinkel (14,4°) gedreht hat, ist die Wartezone WZ vor dem langen Prozess mit einem Beutelrohling einfach bestückt und die Wartezone WZ nach dem langen Prozess vierfach mit befüllten Beuteln belegt. Die Arbeitsstation B bestückt den in dem ersten Aufnahmeelement 7.1 des dritten Objekt-Trägerelements 6.3 befindlichen befüllten Beutel mit einem Anschlussstück. Die Arbeitsstation C entnimmt den in dem dritten Aufnahmeelement 7.3 des zweiten Objekt-Trägerelements 6.2 befindlichen mit dem Anschlussstück versehenen und mit der Lösung befüllten, fertigen Beutel und die Arbeitsstation D bestückt das zweite Aufnahmeelement 7.2 des ersten Objekt-Trägerelements 6.1 mit einem Beutelrohling.

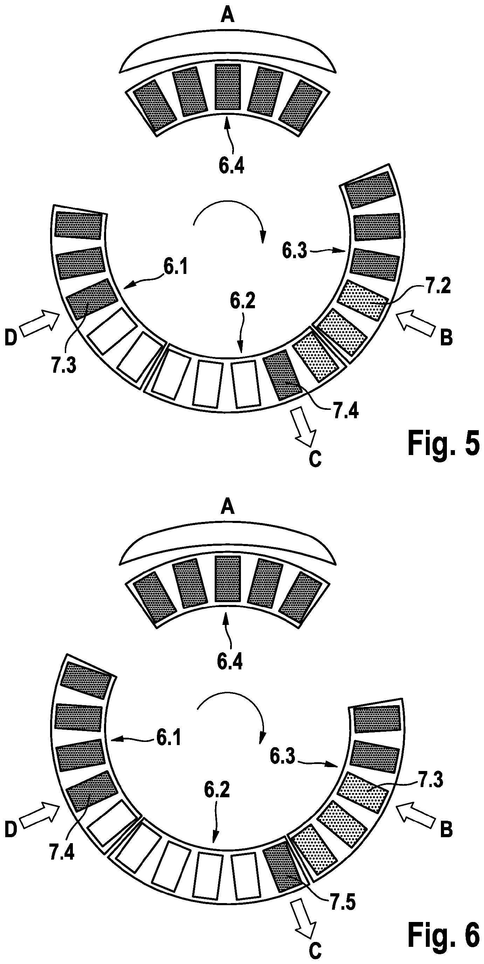

Im dritten Arbeitsschritt (Fig. 5) steuert die Steuereinheit 15 die Betätigungseinheit 11 wieder derart an, dass das erste, zweite und dritte Objekt-Trägerelement 6.1, 6.2, 6.3 mitgenommen und das vierte Objekt-Trägerelement 6.4 festgehalten wird. Der Objektträger 3 dreht sich wieder um einen vorgegebenen Drehwinkel (14,4°). Nach der Drehung des Objektträgers 3 ist die Wartezone WZ vor dem langen Prozess zweifach mit Beutelrohlingen bestückt und die Wartezone nach dem langen Prozess dreifach mit befüllten Beuteln belegt. Die Arbeitsstation B bestückt jetzt den im zweiten Aufnahmeelement 7.2 des dritten Objekt-Trägerelements 6.3 befindlichen befüllten Beutel mit einem Anschlussstück. Die Arbeitsstation C entnimmt den fertigen Beutel aus dem vierten Aufnahmeelement 7.4 des zweiten Objekt-Trägerelements 6.2 und die Arbeitsstation D bestückt das dritte Aufnahmeelement 7.3 des ersten Objekt-Trägerelements 6.1 mit einem Beutelrohling.

Im vierten Schritt (Fig. 6) werden wieder das erste, zweite und dritte Objekt-Trägerelement 6.1, 6.2, 6.3 mitgenommen, während das vierte Objekt-Trägerelement 6.4 festgehalten wird. Nach der Drehung des Objekt-Trägerelements um den vorgegebenen Drehwinkel (14,4°) ist die Wartezone WZ vor dem langen Prozess dreifach mit Beutelrohlingen und die Wartezone WZ nach dem langen Prozess zweifach mit befüllten Beuteln belegt. Die Arbeitsstation B bestückt den in dem dritten Aufnahmeelement 7.3 des dritten Objekt-Trägerelements 6.3 befindlichen befüllten Beutel mit einem Anschlussstück, die Arbeitsstation B entnimmt den fertigen Beutel aus dem fünften Aufnahmeelement 7.5 des zweiten Objekt-Trägerelements 6.2 und die Arbeitsstation D beschickt das vierte Aufnahmeelement 7.4 des ersten Objekt-Trägerelements 6.1 mit einem Beutelrohling.

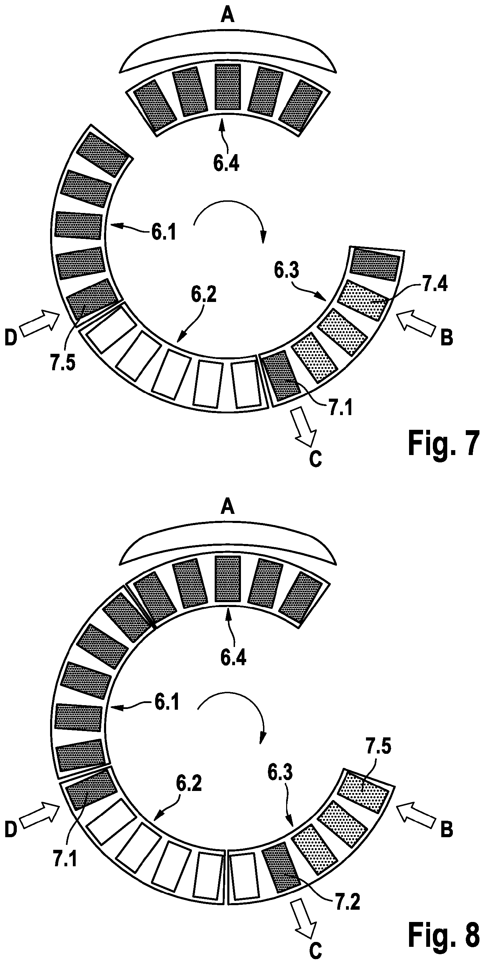

Im fünften Arbeitsschritt (Fig. 7) werden das erste, zweite und dritte Objekt-Trägerelement 6.1, 6.2, 6.3 mitgenommen, während das vierte Objekt-Trägerelement 6.4 festgehalten wird. Nach einer Drehung des Objektträgers 3 um den vorgegebenen Drehwinkel (14,4°) ist die Wartezone WZ vor dem langen Prozess vierfach mit Beutelrohlingen bestückt und die Wartezone WZ nach dem langen Prozess einfach mit befüllten Beuteln belegt. Der in dem vierten Aufnahmeelement 7.4 des dritten Objekt-Trägerelements 6.3 befindliche befüllte Beutel wird mit dem Anschlussstück bestückt, der in dem ersten Aufnahmeelement 7.1 des dritten Objekt-Trägerelements 6.3 befindliche fertige Beutel wird entnommen und das fünfte Aufnahmeelement 7.5 des ersten Objekt-Trägerelements 6.1 wird mit einem Beutelrohling beschickt.

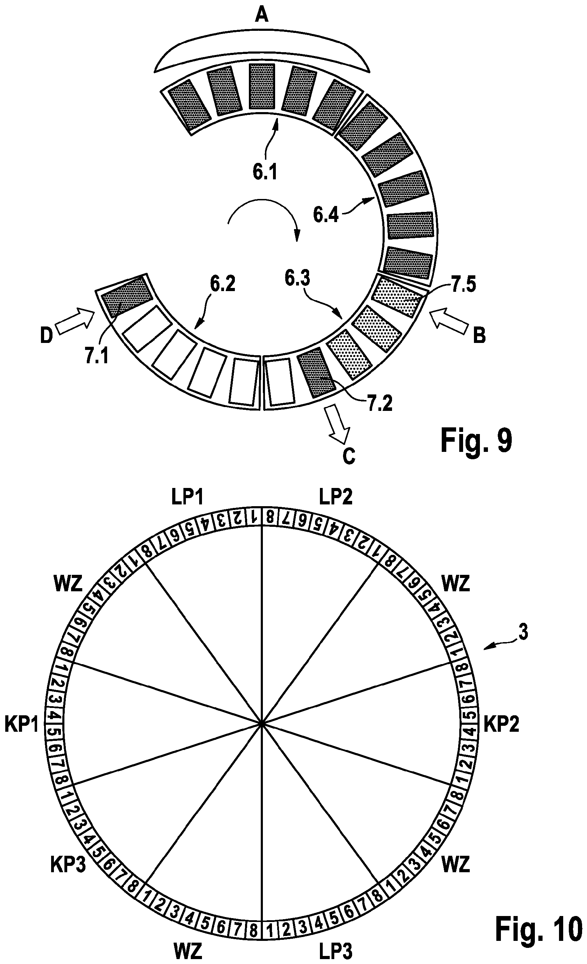

Nunmehr schließt sich der sechste Arbeitsschritt an, der einen kleinen Takt (Fig. 8) mit einer Drehung des Objektträgers um einen Drehwinkel von 14,4° und einen großen Takt (Fig. 9) mit einer Drehung des Objektträgers 3 um einen Drehwinkel von 72° (5* 14,4°=72°) umfasst. In dem kleinen Takt werden das erste, zweite und dritte Objekt-Trägerelement 6.1, 6.2, 6.3 mitgenommen und das vierte Objekt-Trägerelement 6.4 festgehalten. Nach der Drehung des Objektträgers um 14,4° (kleiner Takt) ist die Wartezone WZ vor dem langen Prozess voll und die Wartezone WZ nach dem langen Prozess leer. Der in dem fünften Aufnahmeelement 7.5 des dritten Objekt-Trägerelements 6.3 befindliche befüllte Beutel wird mit einem Anschlussstück bestückt, der fertige Beutel wird aus dem zweiten Aufnahmeelement 7.2 des dritten Objekt-Trägerelements 6.1 entnommen und das erste Aufnahmeelement 7.1 des zweiten Objekt-Trägerelements 6.2 wird mit einem Beutelrohling beschickt.

In dem sich an den kleinen Takt anschließenden großen Takt (Fig. 9) des sechsten Arbeitsschrittes steuert die Steuereinheit 15 die Betätigungseinheit 11 derart an, dass das erste und vierte Objekt-Trägerelement 6.1, 6.4 mitgenommen und das zweite und dritte Objekt-Trägerelement 6.2, 6.3 festgehalten wird. Der Objektträger 3 dreht sich im großen Takt um 72° (5* 14,4°=72°). Nach der Drehung des Objektträgers 3 ist die Wartezone WZ vor dem langen Prozess leer und die Wartezone WZ nach dem langen Prozess voll, so dass sich wieder der erste Arbeitsschritt (Fig. 3) anschließen kann.

Im sechsten Arbeitsschritt ist die Summe aus der Taktzeit kurzer Takt $t_{TK}$ und der Taktzeit langer Takt $t_{TL}$ kleiner als die Gesamtprozesszeit kurzer Takt $t_{GK}$ ($t_{TK}+t_{TL}<t_{GK}$).

Der oben beschriebene Prozess entspricht einer 5-fach Parallelschaltung des längsten Prozesses.

Bei der Auslegung der Produktionsanlage ergeben sich die folgenden Gesetzmäßigkeiten:

| | |
|---|---|
| $t_{PK}$ | Prozesszeit kurzer Prozess |
| $t_{PL}$ | Prozesszeit langer Prozess |
| $t_{TK}$ | Taktzeit kurzer Takt |
| $t_{TL}$ | Taktzeit langer Takt |
| $t_{GK}$ | Gesamtprozesszeit kurzer Takt |
| $t_{GL}$ | Gesamtprozesszeit langer Takt |
| S | Skalierfaktor |
| WZ | Wartezone |
| $A_{OTE}$ | Anzahl Objekt-Trägerelemente |
| $A_{WZ}$ | Anzahl Wartezonen |
| LP | Prozess mit langer Prozesszeit |
| KP | Prozess mit kurzer Prozesszeit |

Gesamtprozesszeit kurzer Takt:

$$t_{GK}=t_{PK}+t_{TK}$$

Kurzer und langer Takt müssen zwingend innerhalb der Taktzeit des kurzen Taktes liegen:

$$t_{TK}+t_{TL}<t_{GK}$$

Gesamtprozesszeit langer Takt:

$$t_{GL}=t_{PL}+t_{TLK}$$

Berechnung der notwendigen Vervielfachung des längsten Prozessschrittes:

$$t_{GL}/t_{GK}=S$$

Je nach Festlegung, welcher Anlagenteil Engpass der gesamten Anlage sein soll, muss S auf- oder abgerundet werden.

Anzahl gekoppelter Objektträger pro Segment:

$$S*\text{Objektträger}=\text{Objekt-Trägerelement}$$

Anzahl Objekt-Trägerelemente pro System: $A_{OTE} \geq 2$ (1 × kurzer Prozess, 1 × langer Prozess)

Anzahl WZ pro System: $A_{WZ} \geq 2$ (pro Wechsel von kurzem Prozess zu langem Prozess WZ notwendig, pro Wechsel von langem Prozess zu kurzem Prozess WZ notwendig)

Fig. 10 zeigt zur Veranschaulichung ein zweites Ausführungsbeispiel eines Arbeitsprozesses, beispielsweise für die Bearbeitung von Kleinteilen. Der Objektträger 3 hat zehn mögliche Positionen. Daraus ergeben sich zehn Mitnehmerelemente 10 und zehn Halteelemente 14. Bei dem vorliegenden Ausführungsbeispiel ergeben sich vier Wartezonen, wobei zweimal von kurzem zu langem Prozess und zweimal von langem zu kurzem Prozess gewechselt wird. In Fig. 10 sind die Prozesse mit langer Prozesszeit mit LP1, LP2, LP3 bezeichnet, während die Prozesse mit kurzer Prozesszeit mit KP1, KP2 und KP3 bezeichnet sind. Jedes Objekt-Trägerelement verfügt über 8 Aufnahmeelemente, die in Fig. 10 mit 1 bis 8 nummeriert sind.

## Patentansprüche

1.   Transporteinrichtung zum Transport von Objekten von Arbeitsstation zu Arbeitsstation einer Produktionsanlage mit

einem Objektträger (3), auf dem eine Mehrzahl von Objekt-Trägerelementen (6) zur Ablage von einem oder mehreren Objekten angeordnet sind, wobei der Objektträger in aufeinanderfolgenden Arbeitstakten derart bewegbar ist, dass die Objekt-Trägerelemente auf einer Bewegungsbahn (8) von Arbeitsstation zu Arbeitsstation transportierbar sind, und
einer Antriebeinheit (5) zum Antrieb des Objektträgers (3),
wobei mindestens ein Objekt-Trägerelement (6) der Mehrzahl von Objekt-Trägerelementen auf dem Objektträger (3) in Richtung der Bewegungsbahn (8), auf der die Objekt-Trägerelemente von Arbeitsstation zu Arbeitsstation (A, B, C, D) transportierbar sind, relativ zum Objektträger verschiebbar angeordnet ist, **dadurch gekennzeichnet,**
**dass** dem mindestens einen Objekt-Trägerelement (6) ein zusammen mit dem Objektträger (3) bewegbares Mitnehmerelement (10) zugeordnet ist, das zwischen einem aktiven Zustand, in dem eine Relativbewegung von Objekt-Trägerelement und Objektträger verhindert wird, und einem nicht aktiven Zustand, in dem eine Relativbewegung von Objekt-Trägerelement und Objektträger zugelassen wird, bewegbar ist, und
**dass** dem mindestens einen Objekt-Trägerelement (6) ein ortsfestes Halteelement (14) zugeordnet ist, das zwischen einem aktiven Zustand, in dem das Objekt-Trägerelement festgehalten wird, und einem nicht aktiven Zustand, in dem das Objekt-Trägerelement freigegeben wird, bewegbar ist,
**dass** eine Betätigungseinheit (11) zur Betätigung des mindestens einen Mitnehmerelements (10) und des mindestens einen Halteelements (14) und eine Steuereinheit (15) für die Betätigungseinheit vorgesehen ist, wobei die Steuereinheit derart ausgebildet ist, dass in einzelnen Arbeitstakten der aufeinanderfolgenden Arbeitstakte, das Mitnehmerelement (10) einen aktiv Zustand und das Halteelement (14) einen inaktiven Zustand einnimmt, so dass das mindestens eine Objekt-Trägerelement (6) von dem Objektträger (3) mitgenommen und von Arbeitsstation zu Arbeitsstation (A, B, C, D) bewegt wird, und in einzelnen Arbeitstakten der aufeinanderfolgenden Arbeitstakte, das Mitnehmerelement (10) einen inaktiven Zustand und das Halteelement (14) einen aktiven Zustand einnimmt, so dass das mindestens eine Objekt-Trägerelement an einer Arbeitsstation (A, B, C, D) verbleibt.

2.   Transporteinrichtung nach Anspruch 1, **dadurch gekennzeichnet, dass** sämtliche Objekt-Trägerelemente (6) der Mehrzahl von Objektträgerelementen auf dem Objektträger (3) in Richtung der Bewegungsbahn (8), auf der die Objekt-Trägerelemente von Arbeitsstation zu Arbeitsstation (A, B, C, D) transportierbar sind, relativ zum Objektträger (3) verschiebbar angeordnet sind, dass jedem Objekt-Trägerelement (6) ein sich zusammen mit dem Objektträger (3) bewegbares Mitnehmerelement (10) zugeordnet ist, dass jedem Objekt-Trägerelement (6) ein ortsfestes Halteelement (14) zugeordnet ist, und dass die Betätigungseinheit (11) derart ausgebildet ist, dass in einzelnen Arbeitstakten der aufeinanderfolgenden Arbeitstakte, mindestens eines der Mitnehmerelemente (10) einen aktiv Zustand und mindestens eines der Halteelemente (14) einen inaktiven Zustand einnimmt, so dass mindestens ein Objekt-Trägerelement (6) von dem Objektträger (3) mitgenommen und von Arbeitsstation zu Arbeitsstation (A, B, C, D) bewegt wird, und in einzelnen Arbeitstakten der aufeinanderfolgenden Arbeitstakte, mindestens ein Mitnehmerelement (10) einen inaktiven Zustand und mindestens ein Halteelement (14) einen aktiven Zustand einnimmt, so dass mindestens ein Objekt-Trägerelement an einer Arbeitsstation (A, B, C, D) verbleibt.

3.   Transporteinrichtung nach Anspruch 1 oder 2, **dadurch gekennzeichnet, dass** die Transporteinrichtung als ein Rundschalttisch ausgebildet ist, der einen um eine Drehachse (4) drehbaren Objektträger (3) aufweist, wobei die Bewegungsbahn (8), auf der die Objekt-Trägerelemente (6) von Arbeitsstation zu Arbeitsstation (A, B, C, D) transportierbar sind, eine Kreisbahn ist.

4. Transporteinrichtung nach Anspruch 3, **dadurch gekennzeichnet, dass** die Objekt-Trägerelemente (6) auf der Kreisbahn umfangsmäßig verteilt angeordnet sind, wobei auf einem Abschnitt der Kreisbahn ein Objekt-Trägerelement nicht vorhanden ist oder auf einem Abschnitt der Kreisbahn mehrere Objekt-Trägerelemente nicht vorhanden sind.

5. Transporteinrichtung nach einem der Ansprüche 1 bis 4, **dadurch gekennzeichnet, dass** der Objektträger (3) eine Führungsbahn (9) aufweist, in der die Objekt-Trägerelemente (6) frei bewegbar geführt sind.

6. Transporteinrichtung nach einem der Ansprüche 1 bis 5, **dadurch gekennzeichnet, dass** die Objekt-Trägerelemente (6) mehrere Aufnahmeelemente (7) aufweisen, die jeweils zur Aufnahme eines Objektes ausgebildet sind.

7. Transporteinrichtung nach einem der Ansprüche 1 bis 6, **dadurch gekennzeichnet, dass** die Mitnehmerelemente (10) derart ausgebildet sind, dass eine formschlüssige und/oder kraftschlüssige Verbindung zwischen einem Teil des Objekt-Trägerelements (6) und einem Teil des Objektträgers (3) herstellbar ist.

8. Transporteinrichtung nach einem der Ansprüche 1 bis 7, **dadurch gekennzeichnet, dass** die Halteelemente (10) derart ausgebildet sind, dass eine formschlüssige und/oder kraftschlüssige Verbindung zwischen einem Teil des Objekt-Trägerelements (6) und einem ortfesten Teil (2) herstellbar ist.

9. Produktionsanlage zur Herstellung von Produkten mit einer Transporteinrichtung zum Transport von Objekten nach einem der Ansprüche 1 bis 8, **dadurch gekennzeichnet, dass** eine Mehrzahl von Arbeitsstationen (A, B, C, D) vorgesehen ist, wobei jede Arbeitsstation zur Durchführung eines mindestens einen Arbeitsschritt umfassenden Arbeitsprozesses an mindestens einem Produkt, das auf einem Objekt-Trägerelement (6) angeordnet ist, ausgebildet ist.

10. Produktionsanlage nach Anspruch 9, **dadurch gekennzeichnet, dass** mindestens eine Arbeitsstation der Mehrzahl von Arbeitsstationen (A, B, C, D) eine Arbeitsstation zur Durchführung eines Arbeitsprozesses mit einer Prozesszeit ist, die länger als die Prozesszeiten der anderen Arbeitsstationen ist.

11. Produktionsanlage zur Herstellung von mit einem medizinischen Produkt befüllten Behältnissen nach Anspruch 9 oder 10, **dadurch gekennzeichnet, dass** die Arbeitsstation (A) mit der längeren Prozesszeit eine Arbeitsstation zum Befüllen der Behältnisse mit dem medizinischen Produkt ist und die anderen Arbeitsstationen (B, C, D) mit den kürzeren Prozesszeiten eine Arbeitsstation (D) zum Auflegen von ungefüllten Behältnissen, die mit einem Anschlussstück zu versehen sind, eine Arbeitsstation (B) zum Anbringen des Anschlussstücks an den Behältnissen und eine Arbeitsstation (C) zum Entnehmen der mit dem Anschlussstück versehenen und mit dem medizinischen Produkt befüllten Behältnissen sind.

**Claims**

1. Transport device for transporting objects from work station to work station of a production facility, comprising

    an object carrier (3) on which a plurality of object carrier elements (6) are arranged for placing down one or more objects, the object carrier being able to move in successive cycles in such a way that the object carrier elements can be transported on a movement path (8) from work station to work station, and
    a drive unit (5) for driving the object carrier (3), wherein at least one object carrier element (6) of the plurality of object carrier elements on the object carrier (3) is arranged to be displaceable relative to the object carrier in the direction of the movement path (8) on which the object carrier elements can be transported from work station to work station (A, B, C, D),
    **characterised in that**
    the at least object carrier element (6) is assigned a dog element (10) that can move together with the object carrier (3) and can move between an active state, in which relative movement between the object carrier element and object carrier is prevented, and an inactive state, in which relative movement between the object carrier element and object carrier is permitted, and
    the at least one object carrier element (6) is assigned a stationary retaining element (14) that can move between an active state, in which the object carrier element is held in place, and an inactive state, in which the object carrier element is released,
    an actuation unit (11) for actuating the at least one dog element (10) and the at least one retaining element (14) is provided and a control unit (15) for the actuation unit is provided, the control unit being designed such that, in some cycles of the successive cycles, the dog element (10) assumes an active state and the retaining element (14) assumes an inactive state such that the at least one object carrier element (6) is carried along by the object carrier (3) and moved from work station to work station (A, B, C, D), and, in some cycles of the successive cycles, the dog element (10) assumes an inactive state and the retaining element (14) assumes an active state such that the at least one object carrier element remains at a work station (A, B, C, D).

2. Transport device according to claim 1, **characterised in that** all the object carrier elements (6) of the plurality of object carrier elements on the object carrier (3) are arranged to be displaceable relative to the object carrier (3) in the direction of the movement path (8) on which the object carrier elements can be transported from work station to work station (A, B, C, D), **in that** each object carrier element (6) is assigned a dog element (10) that can move together with the object carrier (3), **in that** each object carrier element (6) is assigned a stationary retaining element (14), and **in that** the actuation unit (11) is designed such that, in some cycles of the successive cycles, at least one of the dog elements (10) assumes an active state and at least one of the retaining elements (14) assumes an inactive state such that at least one object carrier element (6) is carried along by the object carrier (3) and moved from work station to work station (A, B, C, D), and, in some cycles of the successive cycles, at least one dog element (10) assumes an inactive state and at least one retaining element (14) assumes an active state such that at least one object carrier element remains at a work station (A, B, C, D).

3. Transport device according to either claim 1 or claim 2, **characterised in that** the transport device is in the form of a rotary indexing table comprising an object carrier (3) which can turn about an axis of rotation (4), the movement path (8) on which the object carrier elements (6) can be transported from work station to work station (A, B, C, D) being a circular path.

4. Transport device according to claim 3, **characterised in that** the object carrier elements (6) are distributed circumferentially on the circular path, one segment of the circular path not having an object carrier element or one segment of the circular path not having a plurality of object carrier elements.

5. Transport device according to any of claims 1 to 4, **characterised in that** the object carrier (3) comprises a guide path (9) in which the object carrier elements (6) are guided in a freely movable manner.

6. Transport device according to any of claims 1 to 5, **characterised in that** the object carrier elements (6) comprise a plurality of receiving elements (7) which are each designed to receive an object.

7. Transport device according to any of claims 1 to 6, **characterised in that** the dog elements (10) are designed such that an interlocking and/or frictional connection can be established between a part of the object carrier element (6) and a part of the object carrier (3).

8. Transport device according to any of claims 1 to 7, **characterised in that** the retaining elements (10) are designed such that an interlocking and/or frictional connection can be established between a part of the object carrier element (6) and a stationary part (2).

9. Production facility for producing products, comprising a transport device for transporting objects according to any of claims 1 to 8, **characterised in that** a plurality of work stations (A, B, C, D) is provided, each work station being designed to carry out at least one work process, which includes at least one work step, on at least one product arranged on an object carrier element (6).

10. Production facility according to claim 9, **characterised in that** at least one work station of the plurality of work stations (A, B, C, D) is a work station for carrying out a work process having a process time that is longer than the process times of the other work stations.

11. Production facility for producing containers filled with a medical product according to either claim 9 or claim 10, **characterised in that** the work station (A) having the longer process time is a work station for filling the containers with the medical product, and the other work stations (B, C, D) having the shorter process times are a work station (D) for setting down unfilled containers that are to be provided with a connection piece, a work station (B) for attaching the connection piece to the containers, and a work station (C) for removing the containers that have been provided with the connection piece and filled with the medical product.

**Revendications**

1. Dispositif de transport pour le transport d'objets d'un poste de travail à un poste de travail d'une installation de production avec

un support d'objet (3), sur lequel une pluralité d'éléments de support d'objet (6) est agencée pour le dépôt des un ou plusieurs objets, dans lequel le support d'objet est mobile dans des cycles de travail successifs de telle manière que les éléments de support d'objet puissent être transportés sur une bande de déplacement (8) du poste de travail au poste de travail, et

une unité d'entraînement (5) pour l'entraînement du support d'objet (3),

dans lequel

au moins un élément de support d'objet (6) de la pluralité d'éléments de support d'objet est agencé sur le support d'objet (3) en direction de la bande de déplacement (8), sur laquelle les éléments de support d'objet peuvent être transportés du poste de travail au poste de travail (A, B, C, D), de manière mobile par rapport au support d'objet,

**caractérisé en ce**

**qu'**un élément d'entraînement (10) mobile conjointement avec le support d'objet (3) est associé à l'au moins un élément de support d'objet (6), lequel est mobile entre un état actif, dans lequel un mouvement relatif de l'élément de support d'objet et du support d'objet est empêché, et un état non actif, dans lequel un mouvement relatif de l'élément de support d'objet et du support d'objet est autorisé, et

**qu'**un élément de retenue (14) fixe est associé à l'au moins un élément de support d'objet (6), lequel est mobile entre un état actif, dans lequel l'élément de support d'objet est maintenu, et un état non actif, dans lequel l'élément de support d'objet est libéré,

**qu'**une unité d'actionnement (11) est prévue pour l'actionnement d'au moins un élément d'entraînement (10) et d'au moins un élément de retenue (14) et une unité de commande (15) pour l'unité d'actionnement, dans lequel l'unité de commande est réalisée de telle manière que dans des cycles de travail individuels des cycles de travail successifs, l'élément d'entraînement (10) occupe un état actif et l'élément de retenue (14) occupe un élément inactif de sorte que l'au moins un élément de support d'objet (6) soit entraîné par le support d'objet (3) et soit déplacé de poste de travail en poste de travail (A, B, C, D), et dans des cycles de travail individuels des cycles de travail successifs, l'élément d'entraînement (10) occupe un état inactif et l'élément de retenue (14) occupe un état actif de sorte que l'au moins un élément de support d'objet reste au niveau d'un poste de travail (A, B, C, D).

2. Dispositif de transport selon la revendication 1, **caractérisé en ce que** tous les éléments de support d'objet (6) de la pluralité d'éléments de support d'objet sont agencés sur le support d'objet (3) en direction de la bande de déplacement (8), sur laquelle les éléments de support d'objet peuvent être transportés de poste de travail en poste de travail (A, B, C, D), de manière mobile par rapport au support d'objet (3), qu'à chaque élément de support d'objet (6) est associé un élément d'entraînement (10) mobile conjointement avec le support d'objet (3), qu'à chaque élément de support d'objet (6) est associé un élément de retenue (14) fixe, et que l'unité d'actionnement (11) est réalisée de telle manière que dans des cycles de travail individuels des cycles de travail successifs, au moins un des éléments d'entraînement (10) occupe un état actif et au moins un des éléments de retenue (14) occupe un état inactif de sorte qu'au moins un élément de support d'objet (6) soit entraîné par le support d'objet (3) et soit déplacé de poste de travail en poste de travail (A, B, C, D), et dans des cycles de travail individuels des cycles de travail successifs, au moins un élément d'entraînement (10) occupe un état inactif et au moins un élément de retenue (14) occupe un état actif de sorte qu'au moins un élément de support d'objet reste au niveau d'un poste de travail (A, B, C, D).

3. Dispositif de transport selon la revendication 1 ou 2, **caractérisé en ce que** le dispositif de transport est réalisé comme une table de transfert rotative qui présente un support d'objet (3) rotatif autour d'un axe de rotation (4), dans lequel la bande de déplacement (8), sur laquelle les éléments de support d'objet (6) peuvent être transportés de poste de travail en poste de travail (A, B, C, D), est une bande circulaire.

4. Dispositif de transport selon la revendication 3, **caractérisé en ce que** les éléments de support d'objet (6) sont agencés répartis sur la périphérie sur la bande circulaire, dans lequel un élément de support d'objet n'est pas présent sur une section de la bande circulaire ou plusieurs éléments de support d'objet ne sont pas présents sur une section de la bande circulaire.

5. Dispositif de transport selon l'une quelconque des revendications 1 à 4, **caractérisé en ce que** le support d'objet (3) présente une bande de guidage (9), dans laquelle les éléments de support d'objet (6) sont guidés de manière librement mobile.

6. Dispositif de transport selon l'une quelconque des revendications 1 à 5, **caractérisé en ce que** les éléments de support d'objet (6) présentent plusieurs éléments de réception (7) qui sont réalisés respectivement pour la réception d'un objet.

7. Dispositif de transport selon l'une quelconque des revendications 1 à 6, **caractérisé en ce que** les éléments d'entraînement (10) sont réalisés de telle manière qu'une liaison à complémentarité de formes et/ou à force puisse être établie entre une partie de l'élément de support d'objet (6) et une partie du support d'objet (3).

8. Dispositif de transport selon l'une quelconque des revendications 1 à 7, **caractérisé en ce que** les éléments de retenue (10) sont réalisés de telle manière qu'une liaison à complémentarité de formes et/ou à force puisse être établie entre une partie de l'élément de support d'objet (6) et une partie fixe (2).

9. Installation de production pour la fabrication de produits avec un dispositif de transport pour le transport d'objets selon l'une quelconque des revendications 1 à 8, **caractérisée en ce qu'**une pluralité de postes de travail (A, B, C, D) est prévue, dans laquelle chaque poste de travail est réalisé pour la réalisation d'au moins un processus de travail comprenant au moins une étape de travail au niveau d'au moins un produit qui est agencé sur un élément de support d'objet (6).

10. Installation de production selon la revendication 9, **caractérisée en ce qu'**au moins un poste de travail de la pluralité de postes de travail (A, B, C, D) est un poste de travail pour la réalisation d'un processus de travail avec un temps de processus qui est plus long que les temps de processus des autres postes de travail.

11. Installation de production pour la fabrication de récipients remplis d'un produit médical selon la revendication 9 ou 10, **caractérisée en ce que** le poste de travail (A) avec le temps de processus plus long est un poste de travail pour le remplissage des récipients avec le produit médical et les autres postes de travail (B, C, D) avec les temps de processus plus courts sont un poste de travail (D) pour la pose de récipients non remplis qui sont pourvus d'une pièce de raccordement, un poste de travail (B) pour le montage de la pièce de raccordement au niveau des récipients et un poste de travail (C) pour le retrait des récipients pourvus de la pièce de raccordement et remplis du produit médical.

**Fig. 1**

Fig. 2

Fig. 3

Fig. 4

**Fig. 5**

**Fig. 6**

Fig. 7

Fig. 8

**A**

6.1

6.4

6.2

6.3

7.5

D

7.1

B

7.2

C

**Fig. 9**

LP1 LP2

WZ WZ

3

KP1 KP2

KP3 WZ

WZ LP3

**Fig. 10**

**IN DER BESCHREIBUNG AUFGEFÜHRTE DOKUMENTE**

**In der Beschreibung aufgeführte Patentdokumente**

- CH 566249 A5
- CH 566249
- WO 2014090462 A1
- WO 2011000603 A1